# EUROPÄISCHE PATENTSCHRIFT

(11) **EP 0 416 050 B1**
(45) Veröffentlichungstag und Bekanntmachung des Hinweises auf die Patenterteilung: **29.12.1993**
(21) Anmeldenummer: 90901737.8
(22) Anmeldetag: 30.01.1990
(51) Int. Cl.: H02J 3/26, H02M 5/04

(54) **VORRICHTUNG MIT MEHRPHASIGER LAST, STATISCHEM UMRICHTER UND DROSSELSPULEN**
A DEVICE WITH A MULTI-PHASE LOAD, A STATIC CONVERTER AND CHOKE COILS
DISPOSITIF A CHARGE POLYPHASEE, CONVERTISSEUR STATIQUE ET BOBINES D'ARRET

(30) Priorität: 17.02.1989 CH 557/89
(43) Veröffentlichungstag der Anmeldung: 13.03.1991
(73) Patentinhaber: EUROPE PATENT LTD, Dublin 4 (IE); VOET, Eduard Josef, CH-6503 Carasso (CH)
(72) Erfinder: VOET, Eduard, Josef, CH-6503 Carasso (CH)
(74) Vertreter: EGLI-EUROPEAN PATENT ATTORNEYS
(86) Internationale Anmeldenummer: CH9000021
(87) Internationale Veröffentlichungsnummer: WO9009695

(56) Entgegenhaltungen:
- EP-A- 0 186 598
- EP-A- 0 300 872
- DE-A- 3 525 877
- DE-C- 646 418
- FR-A- 2 153 950
- IBM TECHNICAL DISCLOSURE BULLETIN, vol. 7, no. 7, Dezember 1964, NEW YORK US, Seite 569, J. E. Curan : "Power line filter"

## Beschreibung

Die Erfindung betrifft eine Vorrichtung mit einer mehrphasigen Last und einem statischen Umrichter zur mehrphasigen Speisung der Last, sowie je einer Phase zugeordneten und auf einem gemeinsamen Magnetkern gleichsinnig und mit gleicher Windungszahl gewickelten Drosselspulen, wobei je eine der Drosselspulen auf je einer Phasenleitung zur Speisung der Last, in Reihenschaltung zwischen dem Umrichter und der Last, geschaltet ist.

Eine solche Vorrichtung ist beispielsweise aus EP-A-0186598 bekannt. Sie ist dazu vorgesehen, zumindest zwei als kapazitive Last wirkende Glimmentladung-Ozonisatoren zu speisen, und erfüllt den Zweck, durch Kompensation die Rückwirkungen der Glimmentladung auf die von einem Umrichter gebildeten Stromquelle zu beseitigen. Die je einer Phase zugeordneten und auf einem gemeinsamen Magnetkern gleichsinnig und mit gleicher Windungszahl gewickelten Drosselspulen kompensieren die Rückwirkungen der Blindleistung, vermögen aber die Wirkungen der Oberwellen nicht zu beseitigen, letzteres wird erst mit zwei Transformatoren in Scottscher Schaltung erreicht. Deswegen ist die aus EP-A-0186598 bekannte Vorrichtung nur zur Speisung einer kapazitiven Last geeignet, hingegen ist sie zum Betrieb eines mehrphasigen Asynchronmotors als Last, also als Antriebsvorrichtung, und grundsätzlich im Zusammenhang mit Lasten mit induktiven Energiespeichern wie längere Anschlussleitungen, mit Magnetvibratoren, Piezoresonatoren und dergleichen, nicht verwendbar.

Bei einer Antriebsvorrichtung mit einem mehrphasigen Asynchronmotor als Last wird die Belastung der Komponenten der Antriebsvorrichtung während des Betriebs besonders bei hohen Drehzahlen grundsätzlich von den Mängeln der elektromagnetischen Symmetrie des Asynchronmotors und/oder der geschalteten Halbleiter-Endstufen des Umrichters beeinträchtigt. Dies blieb unerheblich, so lange die erwähnten hohen Drehzahlen und die entsprechende Dynamik noch nicht gefordert wurden und auch keine Forderung auf Schaffung der Vorbedingungen für eine Hochleistungs-Lagerung der Welle des Motors insbesondere mit Magnetlagerungen gestellt wurde. Aus der Hochgeschwindigkeits-Antriebstechnik ergeben sich aber heutzutage erhöhte Anforderungen an die Dynamik der Antriebsvorrichtung, was senkrecht auf die Welle wirkende magnetische Kräfte nicht mehr zulässt. Daraus ergibt sich ein völlig anderes, neuartiges Verhalten des Läufers des Asynchronmotors insbesondere in bezug auf dessen Dynamik, kritischen Drehzahlen und Lagerbelastungen. Eine solche Antriebsvorrichtung ist beispielsweise aus der Patentanmeldung PCT/CH89/00188 bekannt.

Aequivalentes gilt auch in bezug auf die oben erwähnten anderen Lasten, nämlich Lasten mit induktiven Energiespeichern, Magnetvibratoren, Piezoresonatoren und dergleichen.

Der Ausgang des Umrichters einer solchen Vorrichtung, insbesondere einer solchen Antriebsvorrichtung, ist auf hohe elektrische Spannungsspitzen von hoher Frequenz empfindlich, daher ist die Zuverlässigkeit des Umrichters zu sichern, und zwar besonders bei hochdynamischen Betriebsarten mit hochgesättigten Lasten, d.h. bei häufigem schnellem Wechsel des Energiebedarfs und der Richtung des Energieflusses (Beschleunigen und Bremsen) unter entsprechender Belastung der Freilauf-Dioden des Umrichters durch die Schaltvorgänge. Die betreffenden Sicherungsmassnahmen bekannter Art reichen für den Schutz der Halbleiter-Endstufen des Umrichters nicht aus, ausserdem erzeugen sie elektrische Verluste und vermindern somit den Wirkungsgrad der Vorrichtung bzw. der Antriebsvorrichtung.

Zudem wirken sich Mängel der elektromagnetischen Symmetrie der Last und des Umrichters als Belastung der Abstützung der Last aus. Die von dieser Belastung verursachten Kräfte und Unregelmässigkeiten hat die Abstützung der Last auszuhalten und die Vorrichtung zu überwinden, wobei kritische Frequenzen nicht gedämpft bzw. weggefiltert werden. Bei einer Antriebsvorrichtung mit einem mehrphasigen Asynchronmotor als Last wirken sich Mängel der elektromagnetischen Symmetrie des Asynchronmotors und des Umrichters als Belastung der Lager des Asynchronmotors aus. Die von dieser Belastung verursachten Kräfte und Unregelmässigkeiten haben die Lager auszuhalten und die Komponenten der Antriebsvorrichtung zu überwinden , wobei kritische Drehzahlen nicht gedämpft bzw. weggefiltert werden.

Bekannt ist in der elektrischen Filtertechnik und beispielsweise aus EP-0300872, bei einer dreiphasigen Netzspeisung die in Form von Spannungsspitzen auf den Phasenleitungen auftretenden Störungen durch gleichsinnig auf einem Ringkern gewickelte Spulen zu unterdrücken. In diesem Zusammenhang ist beispielsweise aus JP-54-144851 die Verwendung eines für Hochfrequenzen ausgelegten einstückigen Ringkerns oder UI-Lamellenkerns bekannt.

Auch ist beispielsweise im Hochleistungsbereich aus SU-680107 bekannt, die Belastung eines Speisungsnetzes durch von einem dreiphasigen Gleichrichter kommende Impulse transformatorisch mittels auf einen gemeinsamen Kern gewickelten Spulen auszugleichen.

Eine solche Technik ist jedoch bisher nicht auf die mehrphasige Speisung einer über einen Umrichter frequenzgesteuerten Last angewendet worden. Insbesondere ist diese Technik bisher nicht auf die mehrphasige Speisung eines über einen Umrichter frequenzgesteuerten Asynchronmotors zu dessen symmetrischer Magnetisierung angewendet worden. Im bisher zur Verfügung stehenden Leistungsbereich war eine solche Anwendung noch nicht nötig, weil Mängel der elektromagnetischen Symmetrie des mehrphasigen Asynchronmotors und/oder des Umrichters bei den bisher erreichbaren Drehzahlen und der bisher erreichbaren Dynamik der Antriebsvorrichtungen vernachlässigt wurden: die asymmetrischen Kräfte sind bei kleinen Drehzahlen und geringer Dynamik der Antriebsvorrichtung vernachlässigbar. Dies ändert sich beim Uebergang zu Hochgeschwindigkeits-Antrieben mit dem Quadrat der Umlaufgeschwindigkeit des Asynchronmotors, entsprechendes gilt für die hohe Dynamik. In geschalteten Umrichtern wurden Schaltspitzen ("spikes") bisher durch im Umrichter vorgesehene zusätzliche Schaltungselemente wie Dioden, Widerstände und Kondensatoren in zu diesem Zweck bekannten Schutzschaltungen ("snubber-networks") aufgefangen.

Aufgabe der Erfindung ist es, die Dynamik, die Zuverlässigkeit und den Wirkungsgrad der eingangs genannten Vorrichtung zu erhöhen, insbesondere wenn es sich bei der Vorrichtung um eine Antriebsvorrichtung handelt. Unter anderem soll die von Pannen verursachte Ausfallrate reduziert werden, indem verhindert wird, dass sich Schaltspitzen sowie Mängel der elektromagnetischen Symmetrie der mehrphasigen Last und/oder der geschalteten Halbleiterelemente der Endstufen des Umrichters als Beeinträchtigung der Zuverlässigkeit auswirken.

Zur Lösung dieser Aufgabe wird eine Vorrichtung nach Anspruch 1 vorgeschlagen.

Um Mängel der elektromagnetischen Symmetrie der mehrphasigen Last und/oder der geschalteten Halbleiter-Endstufen des Umrichters transformatorisch zwischen den Phasen auszugleichen, können die Drosselspulen und der Magnetkern vorzugsweise äquivalent einem Speisungstransformator auf die Frequenz und Leistung des Umrichters ausgelegt sein. Mit diesen Massnahmen ergibt sich eine Symmetrierung des magnetischen Feldes in der angeschlossenen mehrphasigen Last. Wenn es sich bei dieser Last um einen mehrphasigen Asynchronmotors handelt, werden dessen Lager beim hochdynamischen Betrieb mit hochgesättigtem Asynchronmotor entlastet, was erlaubt, den Asynchronmotor mit erhöhter Dynamik zu betreiben. Zu erwähnen ist noch der Vorteil einer Reduktion der akustischen Belastung durch Laufgeräusche des Asynchronmotors und einer Dämpfung der kritischen Drehzahlen insbesondere bei einer Anwendung bei höherpoligen Motoren mit beispielsweise 4 oder mehr Polen.

Im allgemeinen kann die Ausgleichstransformation zwischen den Phasen mit einer Transformatorleistung erfolgen, die etwa einem Drittel der an die Last abgegebenen Ausgangsleistung entspricht. Zudem kann als Last einer der aus der Patentanmeldung PCT/CH89/00188 bekannten Dreiphasen- bzw. Vierphasen-Asynchronmotoren verwendet werden. Diese Motoren bilden zusammen ein Motorensystem, bei welchem die Motoren ein gleiches maximales Drehmonent aufweisen, während sie voneinander verschiedene Betriebsspannung/Betriebsfrequenz-Kennwerte aufweisen, von denen jedes eines der Glieder einer mit √3 bzw. √2 als Quotient gebildeten geometrischen Folge ist, so dass die Motoren dieses Motorensystems mit dem Quotienten √3 bzw. √2 als Bildungsgesetz aufeinander abgestimmt sind. Wenn die Last einer der Motoren dieses Motorensystems ist, ergibt sich, dass der dazu passende Ausgleichstransformator im Hinblick auf seine Windungsverhältnisse ebenfalls eines der Glieder einer mit √3 bzw. √2 als Quotient gebildeten geometrischen Folge ist. In anderen Worten, zum Motorensystem nach der Patentanmeldung PCT/CH89/00188 passt ein entsprechendes System von Ausgleichstransformatoren, so dass die Ausgleichstransformatoren dieses Systems von Ausgleichstransformatoren mit demselben Quotienten √3 als Bildungsgesetz aufeinander abgestimmt sind wie die entsprechenden Motoren des Motorensystems nach der Patentanmeldung PCT/CH89/00188.

Um Schaltspitzen des Umrichters auf der jeweiligen Phase der Speisung zu annullieren, die Drosselspulen und der Magnetkern vorzugsweise äquivalent einem Netzfilter auf die Frequenz und Leistung dieser Schaltspitzen ausgelegt sein, wobei jede Drosselspule eine mittlere Klemme aufweist, die über einen Kondensator mit einer zu einem Referenzpol der internen Gleichspannungsversorgung des Umrichters führenden Referenz-Klemme des Umrichters verbunden ist, um die Schaltspitzen im Verhältnis -1:1 zu transformieren und die transformierten Schaltspitzen an die Referenz-Klemme anzulegen. Vorteilhaft ist dabei, dass die Beseitigung der Schaltspitzen von den geschalteten Halbleiter-Endstufen transformatorisch erfolgt. Ausserdem kann jeder Drosselspule vorzugsweise ein weiterer Kondensator parallelgeschaltet sein, um die Resonanzfrequenz der Drosselspule einzustellen, was ermöglicht, bei der Kommutation die Anstiegsraten der Flanken der transformierten Schaltspitzen einzustellen. Mit diesen Massnahmen ergibt sich eine Verringerung der Spannungsamplituden im störenden Frequenzspektrum durch Verlagerung in einen niedrigeren Frequenzbereich und Verminderung der Flankensteilheit der Schaltspitzen. Zu erwähnen ist noch der Vorteil einer Reduktion der akustischen Belastung durch Schaltgeräusche des Umrichters, während die geringere Belastung der elektronischen Bauelemente der erfindungsgemässen Vorrichtung deren Zuverlässigkeit erhöht.

Ausserdem kann vorzugsweise auf dem Magnetkern eine zusätzliche Spule aufgesetzt sein, die als Sekundärwicklung eines Speisetransformators verwendbar ist. Vorteilhaft ist dabei, dass im Falle eines mehrphasigen Asynchronmotors die Notspeisung des Umrichters aus einer von der Abbremsung der Last gewonnenen elektrischen Energie, wie es beispielsweise in der bereits erwähnten, aus der Patentanmeldung PCT/CH89/00188 bekannten Antriebsvorrichtung vorgesehen ist, bei Trennung der Stromkreise (d.h. über einen Isolationstransformator) erfolgen kann, ohne zu diesem Zweck einen separaten Transformator zu erfordern.

Die Drosselspulen und der Magnetkern können auch als kombinierte Einheit von Ausgleichstransformator und Schaltspitzentransformator ausgeführt werden, wobei der Schaltspitzentransformator nur einen entsprechend geringen Anteil der Windungen (einige Prozent) des Ausgleichstransformators für die Kondensatorbeschaltung nutzt. Die mit Kondensatoren beschaltete Eingangsseite der kombinierten Einheit ist mit den geschalteten Halbleiter-Endstufen des Umrichters verbunden. Ein Kompromiss zwischen den separaten erwähnten Varianten, nämlich der optimalen Auslegung äquivalent einem Speisungstransformator auf die Frequenz und Leistung des Umrichters und der optimalen Auslegung äquivalent einem Netzfilter auf die Frequenz und Leistung dieser Schaltspitzen, ist ebenfalls sinnvoll. Dabei wirken die Drosselspulen und der Magnetkern zusammen als Filter, das selbsttätig zwischen einer Kommutierungsphase und einer stromführenden Phase des Umrichters unterscheidet. Während der Kommutierungsphase kommen die Blindleistungsimpedanzen der Drosselspulen zur Geltung, während der stromführenden Phase kompensieren sie einander und sie annullieren gegenseitig ihre Wirkung, wenn die Summe der Ströme gleich Null ist. Zudem stehen bei einem statischen Umrichter die Betriebsfrequenz und die Kommutierungsfrequenz etwa im Verhältnis 1:1000. Da bei der Ausführung von Drosselspulen und Magnetkern als kombinierte Einheit von Ausgleichstransformator und Schaltspitzentransformator aus herstellungstechnischen Gründen für den Schaltspitzentransformator zumindest drei Windungen zu benutzen sind, ergeben sich reale Windungsverhältnisse, die nur 1:20 bis 1:50 betragen. Daher ist für die Schaltspitzentransformation immer eine ausreichend grosse Induktivität vorhanden.

Nachstehend wird ein Ausbildungsbeispiel der Erfindung anhand der Zeichnung näher erläutert.
- Fig. 1: zeigt ein Blockschaltschema einer Ausbildung der erfindungsgemässe Vorrichtung anhand eines Beispiels, bei welchem die Last ein mehrphasiger Asynchronmotor und die Vorrichtung eine Antriebsvorrichtung ist.
- Fig. 2: zeigt ein Beispiel einer Anordnung von Drosselspulen auf einem gemeinsamen Magnetkern in einer erfindungsgemässen Vorrichtung.

Die Erfindung wird im nachstehenden am Beispiel einer dreiphasigen Ausbildung der erfindungsgemässen Vorrichtung im Zusammenhang mit einer Ausführung der Last als dreiphasiger Asynchronmotor erläutert. Es ist dabei zu verstehen, dass diese dreiphasige Antriebsvorrichtung als Beispiel gilt und die erfindungsgemässe Vorrichtung auch im Zusammenhang mit anderen mehrphasigen, insbesondere vier und sechsphasigen Ausführungen der Last verwendbar ist: dann sind alle Elemente wie Klemmen, Leitungen, Spulen, Kondensatoren usw., die im nachstehenden im Zusammenhang mit einer dreiphasigen Ausführung des Asynchronmotors dreifach oder sechsfach auftreten und entsprechend beschrieben werden, in einer der mehrphasigen Ausführung der Last entsprechenden Anzahl vorzusehen, beispielsweise im Zusammenhang mit einer vierphasigen Ausführung der Last vierfach oder achtfach.

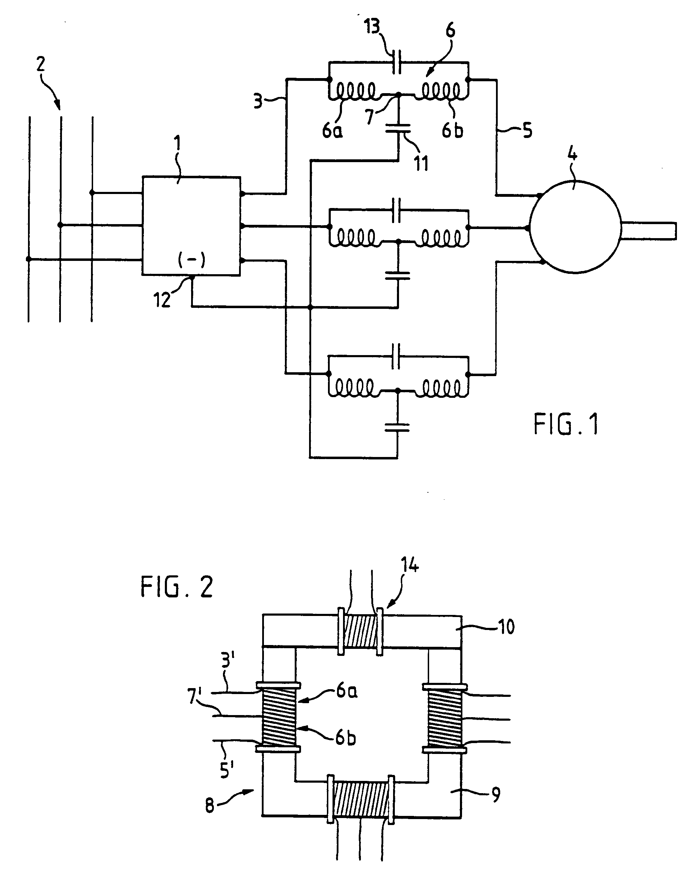

Im Blockschaltschema der Fig. 1 wird mit 1 ein Umrichter der in der Patentanmeldung PCT/CH89/00188 beschriebenen Art bezeichnet, der aus einem dreiphasigen Netz 2 gespeist wird und auf Ausgangsleitungen 3 eine dreiphasige Spannung zur Speisung eines dreiphasigen Asynchronmotors 4 über dessen Anschlussleitungen 5 bereitstellt.

Je eine der Ausgangsleitungen 3 ist mit einer entsprechenden Anschlussleitung 5 über eine entsprechende Drosselspule 6 verbunden. Die Drosselspule 6 ist zweiteilig ausgebildet und mit einer mittleren Klemme 7 zwischen den beiden Teilen 6a, 6b der Drosselspule 6 versehen. Somit ist jede Drosselspule 6 auf einer entsprechenden Phasenleitung 5 der Speisung des Asynchronmotors 4, in Reihenschaltung zwischen dem Umrichter 1 und dem Asynchronmotor 4 geschaltet.

In Fig. 2 wird veranschaulicht, wie alle drei Drosselspulen 6 auf einem gemeinsamen Magnetkern 8 gewickelt sind. Der Magnetkern 8 ist in der Ausbildung nach Fig. 2 als UI-Lamellenkern mit U-Elementen 9 und I-Elementen 10 ausgebildet, dies ist jedoch nur als Beispiel angegeben und der Magnetkern 8 könnte auch mit anderen Formen von Elementen oder als einstückiger Ringkern ausgebildet sein. Die zweiteilige Ausbildung der Drosselspulen 6 ist daran erkennbar, dass jede Drosselspule drei Anschlussleitungen 3', 5', 7' aufweist, von denen die mittlere 7' der mittleren Klemme 7 entspricht, so dass die beiden Teilen 6a, 6b der Drosselspulen 6 zwischen den Anschlussleitungen 7' und 3' bzw. 5' liegen.

Die Wicklungsrichtung der Drosselspulen 6 auf dem gemeinsamen Magnetkern 8 ist derart, dass ein durch die Drosselspulen fliessender idealer Dreiphasenstrom (sinusförmige Ströme genau gleicher Intensität in allen Drosselspulen bei Phasenverschiebung um genau 120°) im Magnetkern 8 magnetischen Flüsse induziert, deren Summe genau gleich Null ist.

In einer Ausbildung der erfindungsgemässen Antriebsvorrichtung sind die Drosselspulen 6 und der Magnetkern 8 so dimensioniert wie bei einem Speisungstransformator auf der Frequenz und Leistung des Umrichters. In anderen Worten, von der Dimensionierung her sind die Drosselspulen 6 auf dem Magnetkern 8 als Ausgleichstransformator so ausgelegt, dass man das Ganze als Leistungstransformator im Verhältnis 1:1 der Phasen untereinander verwenden könnte. Unter diesen Umständen induzieren Abweichungen der Ströme vom idealen Dreiphasenstrom Magnetflüsse, welche diesen Abweichungen entgegenwirken und die vektoriellen Summen der Ströme der mehrphasigen Speisung des Asynchronmotors im wesentlichen gleich Null machen.

Bei einer Antriebsvorrichtung mit einem Umrichter der in der Patentanmeldung PCT/CH89/00188 beschriebenen Art werden die erwähnten Abweichungen vom idealen Dreiphasenstrom im wesentlichen von Mängeln der elektromagnetischen Symmetrie des dreiphasigen Asynchronmotors und/oder der geschalteten Halbleiter-Endstufen des Umrichters hervorgerufen. Daraus folgt, dass die beschriebene Anordnung von Drosselspulen 6 auf dem Magnetkern 8 in Reihenschaltung zwischen dem Umrichter 1 und dem Asynchronmotor 4 eine Korrektur von Mängeln der elektromagnetischen Symmetrie des dreiphasigen Asynchronmotors 4 und/oder der geschalteten Halbleiter-Endstufen des Umrichters 1 bewirkt. Das zum korrekten Betrieb des Asynchronmotors 4 benötigte Eisenvolumen wird auf ein Minimum herabgesetzt. Wenn der Asynchronmotor 4 hochgesättigt und hochdynamisch betrieben wird, sorgt die beschriebene Ausgleichstransformation im Asynchronmotor 4 für eine stets konzentrische Magnetisierung bei gleichbleibender Ausnutzung des Eisens des Ständers.

Durch die Korrektur der elektromagnetischen Symmetrie des dreiphasigen Asynchronmotors und/oder der geschalteten Halbleiter-Endstufen des Umrichters wird die Belastung der Lagerung der Welle des Asynchronmotors besonders im hochdynamischen Betrieb vermindert, insbesondere die senkrecht zur Welle gerichtete Lagerbelastung, auch wenn es sich um einen höherpoligen Asynchronmotor mit beispielsweise 4 oder mehr Polen handelt.

Ausserdem werden, durch die Korrektur der elektromagnetischen Symmetrie und die Verminderung des Eisengewichts des dreiphasigen Asynchronmotors, kleinere Motorzeitkonstanten bei hoher Sättigung erreicht.

In anderen Worten, beim Magnetkern mit drei gleichen Wicklungen mit gleicher magnetischen Flussrichtung handelt es sich um einen 6-Pol, der in der Lage ist, am Ausgang eines Umrichters mit der Charakteristik eines niederohmigen Spannungsgenerators eine Stromsymmetrierung vorzunehmen, ohne den Innenwiderstand am Ausgang des Umrichters entsprechend einer Stromaufprägung aus einer Stromquelle zu erhöhen.

Insgesamt ermöglicht die Erfindung auf vorteilhafte Weise, eine wesentlich höhere Dynamik des Asynchronmotors zu erreichen und dessen Rundlaufeigenschaften besonders bei hoher Sättigung und hoher Dynamik zu verbessern.

In einer anderen Ausbildung der erfindungsgemässen Antriebsvorrichtung, die besonders zum Schutz des Umrichters gegen Schaltspitzen ("spikes") bestimmt ist, sind die Drosselspulen 6 und der Magnetkern 8 so dimensioniert, dass die Drosselspulen und der Magnetkern äquivalent einem Netzfilter auf die Frequenz und Leistung von Schaltspitzen ("spikes") des Umrichters ausgelegt sind, um diese Schaltspitzen auf der jeweiligen Phase der Speisung zu annullieren.

Insbesondere sind die Drosselspulen 6, im Vergleich zur vorstehend beschriebenen Ausbildung der erfindungsgemässen Vorrichtung, die besonders zur Korrektur der elektromagnetischen Symmetrie des dreiphasigen Asynchronmotors und/oder der geschalteten Halbleiter-Endstufen des Umrichters bestimmt ist, mit einer 10mal bis 20mal grösseren Anzahl Windungen versehen.

Bei einer Leistungsendstufe mit geschalteter Induktivität erzeugt diese nämlich bei der Kommutierung oder auch beim Oeffnen eines Kontaktes Spitzenspannungen an den geschalteten Halbleiter-Endstufen. Diese Spitzenspannungen werden bekannterweise mit Freilauf-Dioden beseitigt, rein theoretisch erfolgt jedoch der Spannungsanstieg in der Zeit Null, dem können die Dioden nicht unendlich schnell folgen, somit werden an den geschalteten Halbleiter-Endstufen trotz der Dioden unzulässige Spitzenspannungen erzeugt.

Nun wird bei jeder Drosselspule die mittlere Klemme 7 über einen Kondensator 11 mit einer zu einem Referenzpol der internen Gleichspannungsversorgung des Umrichters 1 führenden Referenz-Klemme 12 des Umrichters 1 verbunden. Der Kondensator 11 verzögert die Schaltspitzen relativ zur Referenz-Klemme 12. Dadurch entsteht zwischen den beiden Teilen 6a, 6b der Drosselspule 6 auf den Frequenzen der abgeleiteten Schaltspitzen ein Transformator im Verhältnis -1:1. Dieser induziert jeweils im Teil 6a der Drosselspule 6 eine dem Anstieg der Schaltspitzen im Teil 6b der Drosselspule 6 entgegengerichtete Spannung gleicher Grösse. Die so transformierten Schaltspitzen werden an die Referenz-Klemme 12 des Umrichters 1 angelegt. Somit werden auf verlustarme Weise sowohl die störenden Schaltspitzen annulliert als auch deren effektive Anstiegszeit verlängert, es wird eine "weiche" Kommutierung der geschalteten Halbleiter-Endstufen erreicht.

Ausserdem erfolgt die erreichte "weiche" Kommutierung der geschalteten Halbleiter-Endstufen jeweils mit dem Momentanwert des Stromes, damit wird die Blindstrombelastung der Halbleiter-Endstufen und die Belastung des betreffenden Kondensators 7 während der Kommutierung verringert. Nach der Kommutierung verschwindet die Wirkung der Induktivität der betreffenden Drosselspule 6.

Jeder Drosselspule kann zudem, wie in Fig. 1 dargestellt, ein weiterer Kondensator 13 parallelgeschaltet sein. Mit Hilfe dieses Kondensators 13 ist die Resonanzfrequenz der Drosselspule 6 und somit die Zeitkonstante der Schaltspitzen-Transformation einstellbar. In anderen Worten, mit dem Kondensator 13 wird das als störend bezeichnete Frequenzspektrum der Schaltspitzen definiert, auf den die beschriebene Schaltspitzen-Transformation ausgeübt wird. Dies ermöglicht, bei der Kommutation die Anstiegsraten der Flanken der transformierten Schaltspitzen einzustellen.

Bei jeder Drosselspule wird auch im Teil 6a der Drosselspule 6 (auf Seite des Umrichters 1) eine dem Anstieg eventueller Spannungsspitzen im Teil 6b der Drosselspule 6 (auf Seite der Last) entgegengerichtete Spannung gleicher Grösse induziert. Solche Spannungsspitzen entstehen auf Seite der Last durch Schaltvorgänge und dergleichen, deren störende und für die Halbleiter-Endstufen gefährliche Spannungsamplituden im störenden Frequenzspektrum auf verlustarme Weise vermindert werden, wie auch deren effektive Anstiegszeit verlängert wird.

Kurz, die erfindungsgemässe Antriebsvorrichtung ist dank der Kombination von Drosselspulen 6 sowie Kondensatoren 7 und 13 mit einer verlustarmen Schutzschaltung für die Halbleiter-Endstufen des Umrichters 1 versehen, welche die Spannungsspitzen von den Halbleiter-Endstufen des Umrichters 1 zum Asynchronmotor 4 hin transformiert, und umgekehrt an der Seite der Last anliegende Spannungsspitzen jeweils so umformt, dass sie für die Halbleiter-Endstufen des Umrichters 1 keine Gefahr mehr darstellen.

Die Auslegung der Drosselspulen 6 bestimmt sich nach Leistung und Frequenzbereich je nach ihrem Zweck, zur Korrektur der elektromagnetischen Symmetrie des dreiphasigen Asynchronmotors und/oder der geschalteten Halbleiter-Endstufen des Umrichters, oder zur Spannungsspitzen-Transformation.

Bei der Spannungsspitzen-Transformation ist das wichtigste Resultat, die Zuverlässigkeit des statischen Umrichters besonders bei hochdynamischen Betriebsarten, d.h. mit häufigem Wechsel des Energiebedarfs und der Richtung des Energieflusses (Beschleunigen/Bremsen) unter entsprechenden Belastung der Freilauf-Dioden des Umrichters durch die Schaltvorgänge, bei geringen elektrischen Verlusten und hohem Wirkungsgrad der Antriebsvorrichtung zu sichern.

Bei der Korrektur der elektromagnetischen Symmetrie des dreiphasigen Asynchronmotors ist das wichtigste Resultat die Entlastung der Lager beim hochdynamischen Betrieb mit hochgesättigtem Asynchronmotor, so dass der Asynchronmotor mit erhöhter Dynamik betrieben werden kann.

Dabei erzeugen die Drosselspulen der erfindungsgemasse Antriebsvorrichtung bei optimaler elektromagnetischer Symmetrie des Asynchronmotors und der geschalteten Halbleiter-Endstufen des Umrichters ausser ihrem Kupferwiderstand keinen zusätzlichen Innenwiderstand am Ausgang des Umrichters, folglich bei richtiger Dimensionierung auch keine Verlustwärme, so dass der Wirkungsgrad der erfindungsgemässen Antriebsvorrichtung davon nicht beeinträchtigt wird. Die bisher zu diesem Zweck bekannten Schutzschaltungen ("snubber-networks") enthalten im Gegensatz zur erfindungsgemässen Antriebsvorrichtung Widerstände, welche entsprechende thermische Verluste verursachen.

## Patentansprüche

1. Vorrichtung mit einer mehrphasigen Last und einem statischen Umrichter zur mehrphasigen Speisung der Last, sowie je einer Phase zugeordneten und auf einem gemeinsamen Magnetkern (8) gleichsinnig und mit gleicher Windungszahl gewickelten Drosselspulen (6), wobei je eine der Drosselspulen (6) auf je einer Phasenleitung (3,5) zur Speisung der Last (4), in Reihenschaltung zwischen dem Umrichter (1) und der Last (4), geschaltet ist, **dadurch gekennzeichnet, dass** die Drosselspulen (6) und der Magnetkern (8) äquivalent einem Netzfilter auf die Frequenz und Leistung von Schaltspitzen ("spikes") des Umrichters (1) ausgelegt sind, um diese Schaltspitzen auf der jeweiligen Phase (3) der Speisung zu annullieren, und dass jede Drosselspule (6) eine mittlere Klemme (7) aufweist, die über einen Kondensator (11) mit einer zu einem Referenzpol der internen Gleichspannungsversorgung des Umrichters (1) führenden Referenz-Klemme (12) des Umrichters (1) verbunden ist, um die Schaltspitzen im Verhältnis -1:1 zu transformieren und die transformierten Schaltspitzen an die Referenz-Klemme (12) anzulegen.

2. Vorrichtung nach Anspruch 1, dadurch gekennzeichnet, dass jeder Drosselspule (6) ein weiterer Kondensator (13) parallelgeschaltet ist, um die Resonanzfrequenz der Drosselspule einzustellen.

3. Vorrichtung nach Anspruch 1, dadurch gekennzeichnet, dass sie eine Antriebsvorrichtung und die Last ein mehrphasiger Asynchronmotor ist.

## Claims

1. A device comprising a multiphase load and a static converter for multiphase supply of the load, as well as inductance coils (6), each allocated to a phase and wound in the same direction and with the same number of windings on a common magnetic core (8) formed to constitute a closed magnetic circuit, each one of the inductance coils (6) being connected with one each of the phase leads (3,5) for supplying the load (4), the connection being made in series between the converter (1) and the load (4), **characterized in that** the inductance coils (6) and the magnetic core (8) are dimensioned equivalent to a mains filter adjusted to the frequency and rating of spikes of converter (1), in order to remove such spikes from the respective phase (3) of the power supply, and that each one inductance coil (6) comprises a central terminal (7) which is connected, via a capacitor (11), to a reference terminal (12) of the converter (1) leading to a reference pole of the internal DC power supply of the converter (1), in order to transform the spikes within a ratio of -1:1 and to apply the transformed spikes to the reference terminal (12).

2. A device as claimed in claim 2, characterized in that a further capacitor (13) is connected in parallel with each inductance coil (6), in order to adjust the resonant frequency of the inductance coil.

3. A device as claimed in claim 1, characterized in that the device is a driving means and the load is a multiphase asynchronous motor.

## Revendications

1. Dispositif comprenant une charge polyphasée et un convertisseur statique pour l'alimentation polyphasée de la charge, ainsi que des bobines d'arrêt (6) attribuées à chacune des phases et enroulées sur un tore magnétique commun (8) dans le même sens et avec le même nombre de spires, chacune des bobines d'arrêt (6) sur chacune des lignes de phase (3, 5) pour l'alimentation de la charge (4) étant montée en série entre le convertisseur (1) et la charge (4), caractérisé en ce que les bobines d'arrêt (6) et le tore magnétique (8) sont dimensionnés de manière équivalente à un filtre de réseau à la fréquence et à la puissance de crêtes de commutation ("spikes") du convertisseur (1) pour annuler ces crêtes de commutation sur chacune des phases (3) de l'alimentation et en ce que chaque bobine d'arrêt (6) présente une borne médiane (7) qui est reliée à l'intervention d'un condensateur (11) à une borne de référence (12) du convertisseur (1) conduisant à un pôle de référence de l'alimentation interne en tension continue du convertisseur (1), pour transformer les crêtes de commutation dans un rapport -1:1 et pour appliquer les crêtes de commutation transformées à la borne de référence (12).

2. Dispositif selon la revendication 1, caractérisé en ce qu'un condensateur supplémentaire (13) est monté en parallèle à chaque bobine d'arrêt (6) pour régler la fréquence de résonance de la bobine d'arrêt.

3. Dispositif selon la revendication 1, caractérisé en ce qu'il s'agit d'un dispositif d'entraînement et la charge est un moteur polyphasé asynchrone.
